# FASCICULE DE BREVET EUROPEEN

(11) **EP 2 098 755 B1**
(45) Date de publication et mention de la délivrance du brevet: **12.10.2011**
(21) Numéro de dépôt: 09153143.4
(22) Date de dépôt: 18.02.2009
(51) Int. Cl.: F16H 3/12

(54) **Procédé de passage descendant avec couple moteur positif, pour boîte de vitesses à crabots**
Verfahren zum Herunterschalten mit positivem Antriebsdrehmoment für Getriebe mit ausrückbaren Klauenkupplungen
Method for shifting down with positive engine torque, for a dog gearbox

(30) Priorité: 27.02.2008 FR 0851242
(43) Date de publication de la demande: 09.09.2009
(73) Titulaire: PEUGEOT CITROËN AUTOMOBILES S.A., 78140 Vélizy Villacoublay (FR)
(72) Inventeur: Gualino, David, 38330 Saint-Ismier (FR); Lelasseux, Xavier, 92150 Suresnes (FR); Mitchell, Clément, 92250 La Garenne Colombes (FR); Maurel, Stéphane, 92130 Issy les Moulineaux (FR)

(56) Documents cités:
- EP-A- 0 641 959
- DE-A1-102005 060 877
- DE-C1- 19 844 783
- US-A- 5 136 897

## Description

La présente invention concerne des stratégies de changement de vitesse pour une transmission du type boîte de vitesses manuelle d'un véhicule automobile, comportant des crabots pour l'engagement des rapports de vitesse.

Il existe des boîtes de vitesses automatiques comprenant des rapports de vitesse réalisés par des combinaisons de trains planétaires, les passages des rapports se faisant par l'actionnement de freins et d'embrayages, tout en transmettant aux roues motrices un couple moteur. Ces boîtes de vitesses ont pour inconvénient d'être lourdes et chères, de plus elles comportent un rendement médiocre.

Les boîtes de vitesses manuelles des véhicules automobiles comportent un arbre primaire lié au moteur du véhicule par un embrayage, et un ou deux arbres parallèles récepteur liés aux roues motrices du véhicule. L'arbre primaire peut être relié à chaque arbre récepteur par des couples de pignons formant un engrenage, transmettant le mouvement de l'un à l'autre suivant différents rapports de démultiplication correspondant respectivement à autant de rapports de vitesse.

Un des pignons de chaque engrenage est solidaire de l'arbre le supportant, l'autre pignon de l'engrenage est monté libre en rotation, il peut être rendu solidaire de son arbre par le coulissement axial d'un manchon de synchronisation. Ce coulissement réalise d'abord une synchronisation de la vitesse du pignon libre avec celle de l'arbre le supportant par un dispositif de synchronisation comportant des cônes de frottement, puis un crabotage assurant la solidarisation complète du pignon sur l'arbre.

Chaque manchon de synchronisation peut commander l'engagement d'un rapport disposé axialement d'un côté du manchon, ou de deux rapports disposés des deux côtés. De plus, un rapport de marche arrière réalise une inversion du sens de marche de l'arbre récepteur.

Ces boîtes de vitesses qui peuvent être automatisées sont simples et offrent un bon rendement, mais nécessitent un synchroniseur par rapport de vitesse, ce qui impose un certain encombrement. De plus elles comportent une rupture de couple lors du passage des vitesses, qui peut être inconfortable.

Sachant que le document DE 198 44 783 C1 représente l'état de la technique le plus proche, une solution connue présentée notamment dans le document FR-A1-2674928, propose une boîte de vitesses manuelle automatisée comportant un nombre réduit de synchroniseurs. En effet, en utilisant un synchroniseur seulement sur le premier rapport de vitesse et des crabots sans synchroniseur sur les autres rapports, on peut utiliser ce synchroniseur pour lors d'un passage descendant vers une vitesse inférieure, l'engager temporairement afin d'augmenter la vitesse de l'arbre primaire et la synchroniser pour préparer le crabotage du rapport suivant.

Toutefois cette solution ne permet pas de synchroniser la vitesse de l'arbre primaire dans le cas d'un passage montant vers une vitesse supérieure.

On pourrait utiliser aussi un synchroniseur sur le dernier rapport de vitesse, pour de la même manière synchroniser la vitesse de l'arbre primaire dans le cas d'un passage montant.

Cependant, ces solutions ne permettent pas de piloter un certain couple dépendant de la demande du conducteur, sur les roues motrices du véhicule lors des changements de vitesse.

La présente invention a notamment pour but d'éviter ces inconvénients de la technique antérieure, et de proposer un procédé simple et efficace qui permette de réaliser un passage de vitesse descendant sur une boîte à crabots, tout en pilotant un couple moteur positif ou couple de traction transmis aux roues motrices du véhicule.

Elle propose à cet effet un procédé de passage descendant avec couple moteur positif pour boîte de vitesses à crabots de véhicule automobile, comportant des actionneurs pour la commande d'un embrayage d'entrée lié à un arbre primaire, pour l'engagement des crabots et d'un synchroniseur disposé sur un rapport de vitesse égal ou supérieur à un rapport initial, caractérisé en ce qu'il réalise successivement les opérations suivantes :
- l'embrayage d'entrée est délesté pour descendre à une capacité en couple inférieure au couple moteur ;
- après un début de glissement de l'embrayage d'entrée, le synchroniseur est actionné pour transmettre un couple de roues dépendant de la demande du conducteur, la capacité en couple de l'embrayage étant ajustée pour fournir le couple au synchroniseur, en parallèle l'actionneur du crabot du rapport initial exerce une force continue de dégagement de ce rapport ;
- le rapport initial étant dégagé, le synchroniseur maintient le niveau de couple dépendant de la demande du conducteur, pendant que le couple moteur est piloté de manière à ce que l'embrayage conserve un glissement, son couple d'embrayage restant supérieur au couple de synchroniseur, pour augmenter la vitesse de l'arbre primaire ;
- quand la vitesse de l'arbre primaire devient proche de celle du rapport final, ce rapport final est engagé ;
- le synchroniseur est progressivement désactivé, l'embrayage étant refermé ensuite ou simultanément.

Un avantage du procédé de passage selon l'invention est qu'en transmettant un couple d'embrayage supérieur au couple de synchronisation, on peut à la fois appliquer au moins une fraction du couple moteur positif initial transmise aux roues motrices par le synchroniseur, et en même temps augmenter la vitesse de l'arbre primaire.

Le procédé selon l'invention peut en outre comporter une ou plusieurs des caractéristiques suivantes, qui peuvent être combinées entre elles.

Avantageusement, pendant les phases de travail du synchroniseur le couple délivré par le moteur est légèrement augmenté.

Selon une caractéristique de l'invention, pour l'engagement du rapport final, la vitesse de l'arbre primaire est maintenue légèrement au dessus de celle d'engagement de ce rapport final.

Avantageusement, après l'engagement du rapport final un baisse du couple moteur est établie pendant un court instant pour diminuer la vitesse du moteur et recoller rapidement l'embrayage.

Selon un mode de fonctionnement particulier on utilise un synchroniseur disposé sur le rapport initial, et pour le dégagement du crabot de ce rapport initial, pendant un court instant le couple moteur est annulé.

Avantageusement un dégagement du rapport initial ou un engagement du rapport final, est enregistré par une mesure de la position de l'actionneur des crabots de ces rapports.

Suivant une disposition particulière, le procédé de passage utilise simultanément deux synchroniseurs disposés sur deux rapports différents, égaux ou supérieurs au rapport initial.

L'invention comprend aussi une boîte de vitesses à crabots de véhicule automobile, comportant des actionneurs pour la commande d'un embrayage d'entrée lié à un arbre primaire, pour l'engagement des crabots et d'un synchroniseur disposé sur un rapport égal ou supérieur à un rapport initial, caractérisée en ce qu'elle comporte des moyens pour réaliser le procédé de passage descendant avec un couple moteur positif décrit ci-dessus, pour passer du rapport initial vers un rapport final inférieur.

Suivant une disposition particulière, la boîte de vitesses à crabots comporte deux synchroniseurs disposés sur deux rapports différents.

En particulier, la boîte de vitesses à crabots peut comporter six rapports engagés par des crabots, ainsi que deux synchroniseurs sur le troisième et le sixième rapport.

L'invention sera mieux comprise et d'autres caractéristiques et avantages apparaîtront plus clairement à la lecture de la description ci-après donnée à titre d'exemple, en référence aux dessins annexés dans lesquels :
- la figure 1 présente de manière schématique, un exemple de boîte de vitesses utilisant le procédé suivant l'invention ;
- la figure 2 présente des diagrammes ayant pour abscisse le temps, comprenant successivement pour un passage de vitesse descendant avec un couple moteur positif :
- des courbes de couple moteur, de couple transmis par l'embrayage d'entrée ou par le synchroniseur, et des courbes d'effort sur les actionneurs de passage ;
- la vitesse du moteur, la vitesse réelle de l'arbre primaire, et la vitesse théorique de cet arbre primaire avec le rapport final engagé ;
- les rapports demandés et les rapports réellement engagés ;
- des couples souhaités ou réels, en sortie de boîte de vitesses ; et

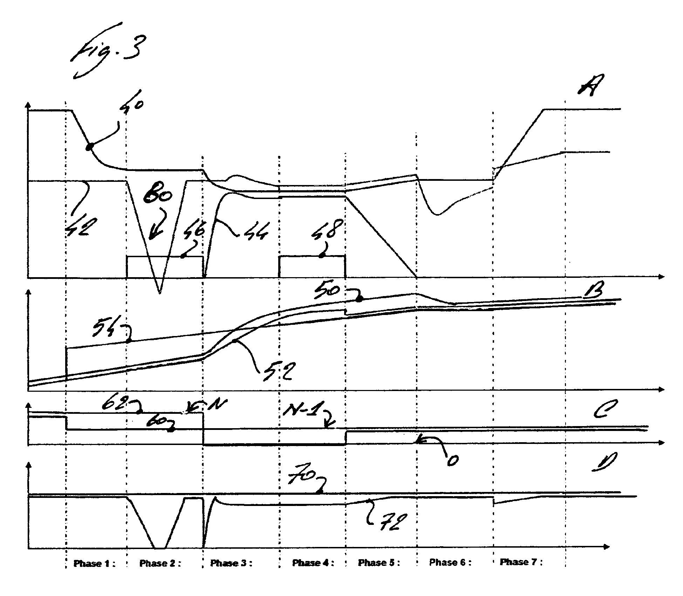

- la figure 3 présente les mêmes diagrammes, avec en variante une chute du couple moteur pendant le décrabotage du rapport initial.

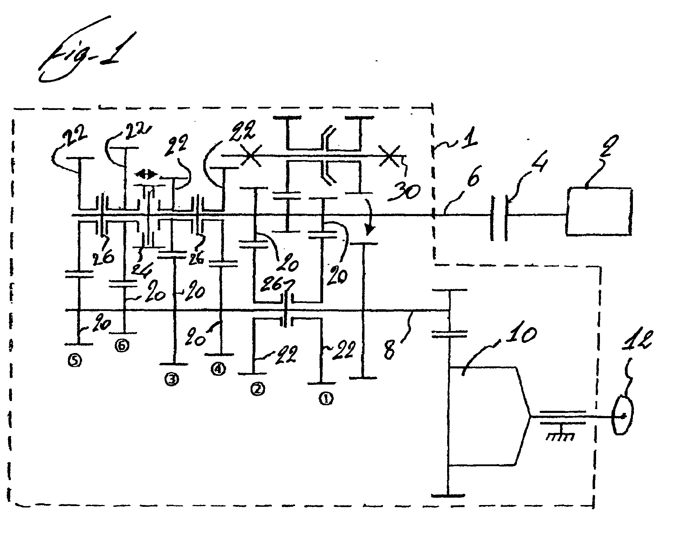

La figure 1 présente une boîte de vitesses 1 à arbres parallèles, comprenant un premier arbre primaire 6 lié au moteur du véhicule 2 par un embrayage 4, et un deuxième arbre récepteur 8 qui entraîne les roues motrices du véhicule 12 par un différentiel 10.

L'arbre primaire 6 supporte une série de six pignons engrenant chacun avec un autre pignon porté par l'arbre récepteur 8, pour former six rapports de vitesses. Pour chacun de ces engrenages, un des pignons 20 est fixé sur l'arbre le supportant, tandis que l'autre 22 est libre, pouvant être lié à l'arbre le supportant par des manchons de crabotage 26 ne comportant pas de dispositif de synchronisation. Chaque manchon de crabotage 26 coulisse axialement sous l'effet d'un actionneur, pour engager d'un côté ou de l'autre un rapport de vitesse.

Un manchon de synchronisation 24 est placé sur l'arbre primaire 6 entre les pignons libres 22 du troisième et du sixième rapport. Les synchroniseurs placés axialement de part et d'autre de ce manchon 24, peuvent transmettre un couple élevé égal au moins à une part importante du couple moteur. Ces synchroniseurs comportent par exemple plusieurs cônes de frottement, mis en oeuvre par un actionneur délivrant une force axiale élevée. Les synchroniseurs peuvent aussi dissiper une énergie importante.

Les crabots des pignons libres 22 du troisième et du sixième rapport, se trouvent axialement par rapport à ces pignons, de l'autre côté du manchon de synchronisation 24.

Un arbre parallèle 30 supporte des pignons pouvant être liés ensemble, pour réaliser une inversion du sens de marche utilisée par le rapport de marche arrière.

Les manchons des crabots 26 et des synchroniseurs 24, ainsi que l'embrayage 4 sont actionnés par des actionneurs non représentés, pilotés eux-mêmes par un calculateur de gestion de la boîte de vitesses, pour réaliser des passages de vitesses suivant la demande du conducteur et les conditions de fonctionnement du véhicule, et en fonction de lois de passage mises en mémoire dans ce calculateur.

Le fonctionnement de la boîte de vitesses 1 est le suivant.

Les passages de vitesses se font avec une ouverture partielle de l'embrayage 4, pour désolidariser en partie l'arbre primaire 6 du moteur 2 comportant une forte inertie provenant de son volant moteur, tout en réduisant éventuellement le couple délivré par les combustions de ce moteur. Puis le couple transmis par l'embrayage 4 est transféré momentanément par un des synchroniseurs du manchon 24, au rapport de vitesse qui lui est lié pour être transmis aux roues motrices 12.

Pour un passage de vitesse montant vers un rapport final avec un couple positif, on peut utiliser le synchroniseur d'un rapport égal ou supérieur à ce rapport final, pour transmettre momentanément le couple moteur et diminuer la vitesse de l'arbre primaire 6.

Pour un passage de vitesse montant avec un couple négatif, on peut utiliser si il en existe un, un synchroniseur d'un rapport inférieur au rapport initial pour diminuer la vitesse de l'arbre primaire 6.

Pour un passage de vitesse descendant avec un couple positif, on peut utiliser si il en existe un, un synchroniseur d'un rapport strictement supérieur au rapport initial pour transmettre momentanément le couple moteur et augmenter la vitesse de l'arbre primaire 6.

Pour un passage de vitesse descendant vers un rapport final avec un couple négatif, on peut utiliser aussi si il en existe un, un synchroniseur d'un rapport égal ou inférieur à ce rapport final, pour augmenter la vitesse de l'arbre primaire 6.

La vitesse de l'arbre primaire 6 ayant ensuite atteint une valeur proche de celle correspondant à l'engagement du rapport final, ce rapport est craboté puis l'embrayage est refermé pour passer la totalité du couple moteur.

Pendant le changement de rapport de vitesse, on pilote en parallèle le couple moteur, l'embrayage et le synchroniseur pour appliquer au final sur les roues motrices 12, un certain couple dépendant de la demande du conducteur, tout en tenant compte de l'énergie dissipé par les composants en cours de glissement.

On réalise ainsi une transmission suivant une architecture du type boîte de vitesses manuelle, comportant un bon rendement et réalisable avec un coût modéré, qui assure un confort lors des changements de vitesses en transmettant au moins une partie du couple moteur aux roues motrices.

En variante, la boîte de vitesses 1 peut comporter deux arbres récepteurs disposés en parallèle.

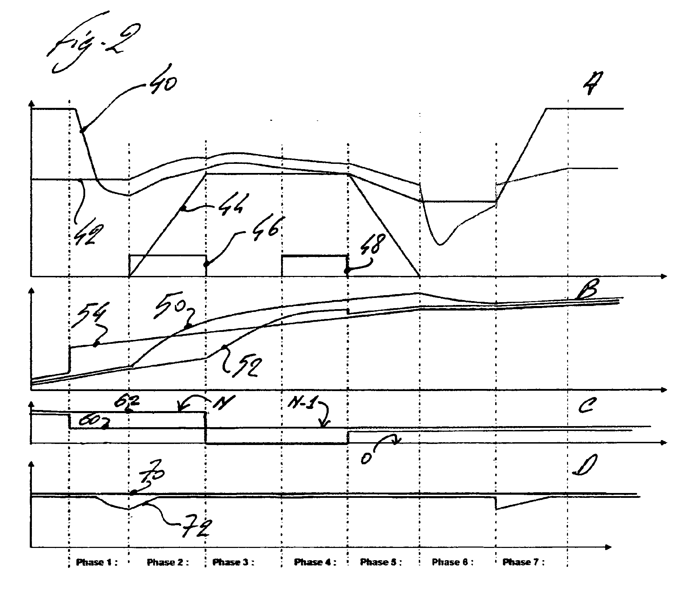

La figure 2 présente de haut en bas quatre diagrammes A, B, C et D, comportant une même abscisse représentant le temps, pour un passage de vitesse descendant avec un couple moteur positif, qui se déroule en sept phases successives notées phase 1 à phase 7.

Le premier diagramme A comporte une courbe de capacité en couple 40 de l'embrayage d'entrée 4, modulé par un mouvement de son actionneur de commande, une courbe de couple moteur 42 délivré suivant une régulation effectuée par le calculateur de contrôle de ce moteur, et une courbe de capacité en couple 44 du synchroniseur, modulé par un mouvement de l'actionneur de son manchon de synchronisation 24.

Ce diagramme A comporte aussi une courbe d'effort d'extraction 46 pour le dégagement du crabot du rapport initial N, et une courbe d'effort d'engagement 48 pour l'engagement du crabot du rapport final inférieur N-1.

Le deuxième diagramme B comporte une courbe de vitesse moteur 50, une courbe de vitesse réelle de l'arbre primaire 52, et une courbe de vitesse théorique de l'arbre primaire 54 dans le cas où le rapport de vitesse N-1 serait engagé.

Le troisième diagramme C comporte une courbe 60 présentant le choix attendu du rapport de vitesse, correspondant à une décision du calculateur de commande de la boîte de vitesses tenant compte de la demande du conducteur ainsi que de différents paramètres de fonctionnement du véhicule, et une courbe 62 présentant le rapport effectivement craboté. Ces courbes sont situées sur trois niveaux, en partant du bas 0 pour aucun rapport engagé, N-1 pour le rapport final engagé et N pour le rapport initial engagé.

Le quatrième diagramme D comporte une courbe présentant le couple aux roues motrices 70 suivant la demande du conducteur, et le couple réel appliqué aux roues motrices 72.

Le passage de rapport descendant avec couple moteur positif décrit ci-dessous, utilise un synchroniseur d'un rapport supérieur ou égal au rapport initial N.

Ce passage peut être avec l'exemple de boîte de vitesses décrit figure 1, une descente d'un rapport de vitesse à partir du deuxième ou du troisième rapport avec utilisation du synchroniseur du troisième ou du sixième rapport, ou une descente à partir du quatrième, du cinquième ou du sixième rapport de vitesse avec utilisation du synchroniseur du sixième rapport.

On peut utiliser le synchroniseur du rapport de vitesse supérieur le plus proche, pour mettre en oeuvre le rapport le plus bas possible et appliquer aux roues motrices un couple important si le conducteur demande un couple élevé.

On peut au contraire utiliser le synchroniseur du rapport le plus élevé si le conducteur demande un couple faible, ce qui permet d'obtenir un réglage plus précis du couple appliqué sur les roues motrices.

Avant la phase 1, la capacité en couple de l'embrayage 40 est supérieure au couple moteur délivré 42, l'embrayage ne glisse pas. Le rapport initial N est engagé.

En début de phase 1, le calculateur décide le passage du rapport inférieur, le rapport demandé 60 passe à N-1. Simultanément, la capacité en couple de l'embrayage 40 baisse progressivement et passe en dessous du couple moteur 42 délivré, l'embrayage commence à patiner.

On détecte ce début de patinage, par exemple en comparant la vitesse moteur 2 avec celle de l'arbre primaire 6 mesurée par un capteur de vitesse. Le patinage provoque une montée de la vitesse du moteur 50 par rapport à celle de l'arbre primaire 52.

Ce glissement de l'embrayage détecté, on applique en phase 2 un effort continu d'extraction 46 pour le dégagement du crabot du rapport initial N.

Parallèlement le synchroniseur du rapport supérieur ou égale est engagé. Le couple de ce synchroniseur 44 monte progressivement pour rejoindre sensiblement le couple de l'embrayage 40 tout en restant en dessous de cette valeur, ce qui transfert du couple vers les roues motrices par cette voie et déleste d'autant le couple transmis sur le rapport N.

Pour obtenir une montée rapide du couple de synchronisation 44, on peut ajuster au préalable, pendant la phase 1, la position de son manchon au point de léchage des cônes de synchronisation pour les préparer avec un faible mouvement de ce manchon, à transmettre rapidement un couple.

Afin de garder un couple de synchronisation 44 transmis aux roues motrices sensiblement constant par rapport au départ, le calculateur du moteur applique aussi pendant cette phase, une légère remontée du couple moteur 42.

Quand le couple transmis sur le rapport N est suffisamment faible, la fonction anti-lâché de son crabot comportant une pente sur les dents de crabotage pour le maintenir engagé sous l'effet d'un couple transmis, n'est plus efficace. Ce crabot se dégage en fin de phase 2, la courbe 62 présentant le rapport effectivement engagé descend à 0.

L'effort continu d'extraction 46 appliqué sur le crabot du rapport N, est à ajuster pour que cette extraction ne se fasse pas trop tôt. De cette manière le couple résiduel transmis sur le rapport initial N est faible, et lors du décrabotage de ce rapport on n'a quasiment pas de variation brutale de couple aux roues motrices qui entraînerait une oscillation de couple.

Pendant les phases 3 et 4 on pilote un effort sur le manchon de synchroniseur 24 pour obtenir un couple positif de synchroniseur 44 qui est sensiblement égal au couple moteur initial, pour transmettre aux roues motrices un couple sensiblement constant.

On garde aussi la légère remontée du couple moteur 42 pendant ces phases, en pilotant le couple moteur pour que le couple transmis par l'embrayage 40 reste supérieur au couple de synchroniseur 44. De cette manière, cette différence de couple de l'embrayage 40 s'appliquant sur un rapport supérieur, permet une accélération de la vitesse du moteur 50 ainsi que de celle de l'arbre primaire 52.

En fin de phase 3, la vitesse réelle de l'arbre primaire 52 a un peu dépassé la vitesse théorique 54 de l'arbre primaire dans le cas du rapport de vitesse N-1 engagé. Le rapport final N-1 peut être engagé.

En phase 4, on applique un effort continu d'engagement 48 sur le crabot du rapport final N-1, qui finit par s'engager quand les dents du crabots s'alignent. Pendant ce temps d'engagement, on maintient une vitesse réelle de l'arbre primaire 52 légèrement supérieure à sa vitesse théorique 54 sur le rapport final, pour permettre aux dents de s'aligner.

Cette phase 4 gère aussi les échecs de crabotage, en reprenant par exemple le cycle de cette phase.

La courbe 62 présentant le rapport effectivement craboté remonte alors à N-1. Le contrôle de l'engagement de ce rapport final peut se faire par exemple, par une mesure de la position de l'actionneur de son manchon.

En phase 5 après l'engagement du rapport final N-1, on baisse progressivement le couple de synchroniseur 44 en délestant la charge axiale appliquée dessus jusqu'à ce qu'elle tombe à une valeur nulle, le couple moteur étant alors parallèlement repris par les pignons du rapport final N-1.

Le dégagement complet du couple de synchroniseur 44 peut être contrôlé par exemple par une mesure de la position de l'actionneur du manchon de synchronisation.

La durée des phases 2 à 5 pendant lesquelles le synchroniseur travaille, doit être réduite au maximum tout en évitant des écarts de couple brutaux qui engendreraient une oscillation de couple, pour réduire le temps de glissement du synchroniseur et son énergie dissipée.

En phase 6 le calculateur du moteur créé une baisse rapide du couple moteur 42, de manière à faire passer un bref instant ce couple moteur sous la valeur de la capacité en couple de l'embrayage 40, pour rapidement coller cet embrayage. En fin de phase 6 l'embrayage ne glisse plus, la vitesse moteur 50 a rejoint celle de l'arbre primaire 52.

Pendant les phases 2 à 6, le glissement de l'embrayage est constamment surveillé par la mesure des différences de vitesse entre le moteur et l'arbre primaire 6, pour réduire aussi l'énergie dissipée.

En phase 7 l'embrayage est collé, il peut transmettre la totalité du couple moteur 42 qui remonte suivant la demande du conducteur. Parallèlement, la capacité de l'embrayage 40 remonte aussi pour revenir à son niveau initial maximum.

En variante cette phase 7 de remontée du couple moteur 42 ainsi que de la capacité de l'embrayage 40, peut commencer plus tôt en parallèle avec la phase 6 de fin de glissement de l'embrayage, pour réduire l'énergie dissipée.

Le procédé de passage montant suivant l'invention peut être utilisé avec la boîte de vitesses présentée figure 1, pour descendre un rapport à partir de l'un quelconque du deuxième au cinquième rapports.

En particulier, on peut pour un passage descendant à partir du deuxième rapport de vitesse, utiliser soit le synchroniseur du troisième rapport pour obtenir un couple élevé sur les roues motrices, soit le synchroniseur du sixième rapport pour obtenir un réglage précis d'un couple faible, soit même utiliser en parallèle les deux synchroniseurs pour obtenir un couple très important, ou réduire l'énergie sur chaque synchroniseur.

En variante on peut utiliser ce procédé pour descendre plusieurs rapports de vitesse à la fois lors d'un unique passage descendant.

La figure 3 présente en complément un procédé de passage descendant avec un couple moteur positif, pour un synchroniseur disposé sur le rapport initial N, par exemple avec la boîte de vitesses 1 pour réaliser un passage descendant à partir du sixième rapport de vitesse.

L'ensemble du procédé reste similaire, mais pendant la phase 2 comportant le décrabotage du rapport initial N, il faut s'assurer que l'on annule le couple s'exerçant sur le crabot pour permettre ce décrabotage, ce qui n'est pas forcément le cas pour la première variante présentée. Pour cela pendant un court instant de cette phase, on réduit le couple moteur suivant une descente rapide vers un couple négatif, suivie d'une remontée, ce qui forme un « V » 80 sur la courbe. De cette manière, on s'assure que les dents du crabot sont bien déchargées, ce qui facilite le coulissement du manchon.

On peut utiliser le procédé de passage descendant avec un couple moteur positif suivant l'invention, pour d'autres types de boîtes de vitesses, comprenant par exemple un seul ou trois synchroniseurs, ou un nombre de rapports de vitesse différent.

On obtient ainsi de manière simple et efficace une boîte de vitesses comportant un bon rendement, et permettant de transmettre au moins une partie du couple moteur suivant la demande du conducteur, pendant ce type de changement de rapport de vitesse.

## Revendications

1. Procédé de passage descendant avec couple moteur positif pour boîte de vitesses à crabots (1) de véhicule automobile, comportant des actionneurs pour la commande d'un embrayage d'entrée (4) lié à un arbre primaire (6), pour l'engagement des crabots (26) et d'un synchroniseur (24) disposé sur un rapport de vitesse égal ou supérieur à un rapport initial (N), **caractérisé en ce qu'**il réalise successivement les opérations suivantes :
- l'embrayage d'entrée (4) est délesté pour descendre à une capacité en couple (40) inférieure au couple moteur (42) ;
- après un début de glissement de l'embrayage d'entrée, le synchroniseur (24) est actionné pour transmettre un couple de roues (72) dépendant de la demande du conducteur, la capacité en couple (40) de l'embrayage étant ajustée pour fournir le couple au synchroniseur, en parallèle l'actionneur du crabot du rapport initial (N) exerce une force continue (46) de dégagement de ce rapport ;
- le rapport initial (N) étant dégagé, le synchroniseur (24) maintient le niveau de couple dépendant de la demande du conducteur, pendant que le couple moteur (42) est piloté de manière à ce que l'embrayage conserve un glissement, son couple d'embrayage (40) restant supérieur au couple de synchroniseur (44), pour augmenter la vitesse de l'arbre primaire (52) ;
- quand la vitesse de l'arbre primaire (52) devient proche de celle du rapport final (54), ce rapport final (N-1) est engagé ;
- le synchroniseur (24) est progressivement désactivé, l'embrayage (4) étant refermé ensuite ou simultanément.

2. Procédé de passage suivant la revendication 1, **caractérisé en ce que** pendant les phases de travail du synchroniseur (24), le couple délivré par le moteur (42) est légèrement augmenté.

3. Procédé de passage suivant la revendication 1 ou 2, **caractérisé en ce que** pour l'engagement du rapport final (N-1), la vitesse de l'arbre primaire (52) est maintenue légèrement au dessus de celle (54) d'engagement de ce rapport final.

4. Procédé de passage suivant l'une quelconque des revendications précédentes, **caractérisé en ce qu'**après l'engagement du rapport final (N-1), un baisse du couple moteur (42) est établie pendant un court instant pour diminuer la vitesse du moteur (50) et recoller rapidement l'embrayage (4).

5. Procédé de passage suivant l'une quelconque des revendications précédentes, **caractérisé en ce qu'**il utilise un synchroniseur (24) disposé sur le rapport initial (N), et **en ce que** pour le dégagement du crabot de ce rapport initial, pendant un court instant le couple moteur (42) est annulé.

6. Procédé de passage suivant l'une quelconque des revendications précédentes, **caractérisé en ce qu'**un dégagement du rapport initial (N) ou un engagement du rapport final (N-1), est enregistré par une mesure de la position de l'actionneur des crabots de ces rapports.

7. Procédé de passage suivant l'une quelconque des revendications précédentes, **caractérisé en ce qu'**il utilise simultanément deux synchroniseurs disposés sur deux rapports différents égaux ou supérieurs au rapport initial (N).

## Claims

1. Method for down-shifting with positive engine torque for a dog gearbox (1) of a motor vehicle comprising actuators for controlling an input clutch (4) connected to a main shaft (6), and for engaging dogs (26) and a synchroniser (24) arranged over a speed ratio greater than or equal to an initial ratio (N), **characterised in that** it carries out the following procedures in succession:
- the input clutch (4) is disengaged to drop to a torque capacity (40) lower than the engine torque (42);
- once the input clutch has started to slip, the synchroniser (24) is actuated to transmit a wheel torque (72) depending on the driver's request, the torque capacity (40) of the clutch being adjusted to supply the torque to the synchroniser, and the actuator of the dog of initial ratio (N) exerts, in parallel, a continuous force (46) for disengagement of this ratio;
- the initial ratio (N) having been disengaged, the synchroniser (24) maintains the level of torque depending on the driver's request, whilst the engine torque (42) is driven in such a way that the clutch preserves a slip, its clutch torque (40) remaining greater than the synchroniser torque (44) to increase the speed of the main shaft (52);
- the final ratio (N-1) is engaged when the speed of the main shaft (52) approaches that of said final ratio (54);
- the synchroniser (24) is progressively deactivated, the clutch (4) being closed again either subsequently or simultaneously.

2. Shifting method according to claim 1, **characterised in that**, during the working phases of the synchroniser (24), the torque supplied by the motor (42) is slightly increased.

3. Shifting method according to either claim 1 or claim 2, **characterised in that**, for engagement of the final ratio (N-1), the speed of the main shaft (52) is kept slightly above that (54) of engagement of said final ratio.

4. Shifting method according to any one of the preceding claims, **characterised in that** after the engagement of the final ratio (N-1) a drop in engine torque (42) is established over a short moment in order to reduce the speed of the engine (50) and quickly close the clutch (4) again.

5. Shifting method according to any one of the preceding claims, **characterised in that** it uses a synchroniser (24) arranged over the initial ratio (N), and **in that** for the disengagement of the dog of said initial ratio the engine torque (42) is cancelled for a short moment.

6. Shifting method according to any one of the preceding claims, **characterised in that** a disengagement of the initial ratio (N) or an engagement of the final ratio (N-1) is recorded by measuring the position of the actuator of the dogs of these ratios.

7. Shifting method according to any one of the preceding claims, **characterised in that** it simultaneously uses two synchronisers arranged over two different ratios which are equal to or greater than the initial ratio (N).

## Patentansprüche

1. Verfahren zum Herunterschalten mit positivem Motormoment für ein Klauengetriebe (1) eines Kraftfahrzeuges, umfassend Betätigungsglieder für die Betätigung einer Eingangskupplung (4), die mit einem Hauptstrang (6) verbunden ist, für das Eingreifen der Klauen (26) und einer Gleichlaufvorrichtung (24), die auf einer Gangstufe angeordnet ist, die gleich oder größer als ein ursprünglicher Gang (N) ist, **dadurch gekennzeichnet, dass** es nacheinander folgende Abläufe ausführt:
- die Eingangskupplung (4) wird entlastet, um auf eine Drehmomentkapazität (40) abzusinken, die geringer als das Motormoment (42) ist;
- nach einem anfänglichen Schlupf der Eingangskupplung, wird die Gleichlaufvorrichtung (24) aktiviert, um ein Radmoment (72) zu übertragen, das abhängig ist von der Anforderung des Fahrers, wobei die Drehmomentkapazität (40) der Kupplung angepasst wird, um das Drehmoment an die Gleichlaufvorrichtung zu liefern, gleichzeitig übt das Betätigungsglied der Klaue des ursprünglichen Ganges (N) eine kontinuierliche Kraft (46) zum Lösen dieses Ganges aus;
- wenn der ursprüngliche Gang (N) gelöst ist, hält die Gleichlaufvorrichtung (24) das Niveau des Drehmoments, das von der Anforderung des Fahrers abhängig ist, aufrecht, während das Motormoment (42) so gesteuert wird, dass die Kupplung einen Schlupf beibehält, wobei das Kupplungsmoment (40) größer als das Moment der Gleichlaufvorrichtung (44) bleibt, um die Geschwindigkeit des Hauptstrangs (52) zu erhöhen;
- wenn sich die Geschwindigkeit des Hauptstrangs (52) dem Endgang (54) nähert, wird dieser Endgang (N-1) übernommen;
- die Gleichlaufvorrichtung (24) wird schrittweise deaktiviert, wobei die Kupplung (4) danach oder gleichzeitig wieder eingekuppelt wird.

2. Verfahren zum Schalten nach Anspruch 1, **dadurch gekennzeichnet, dass** während der Betriebsphasen der Gleichlaufvorrichtung (24) das vom Motor gelieferte Drehmoment (42) geringfügig erhöht wird.

3. Verfahren zum Schalten nach Anspruch 1 oder 2, **dadurch gekennzeichnet, dass** für die Übernahme des Endganges (N-1) die Geschwindigkeit des Hauptstrangs (52) geringfügig über jener (54) der Übernahme dieses Endganges gehalten wird.

4. Verfahren zum Schalten nach einem der vorhergehenden Ansprüche, **dadurch gekennzeichnet, dass** nach Übernahme des Endganges (N-1) eine Senkung des Motormoments (42) während eines kurzen Augenblicks herbeigeführt wird, um die Geschwindigkeit des Motors (50) zu reduzieren und die Kupplung (4) schnell wieder einzukuppeln.

5. Verfahren zum Schalten nach einem der vorhergehenden Ansprüche, **dadurch gekennzeichnet, dass** eine Gleichlaufvorrichtung (24) verwendet wird, die auf dem ursprünglichen Gang (N) angeordnet ist, und **dadurch**, dass für das Lösen der Klaue dieses ursprünglichen Ganges das Motormoment (42) während eines kurzen Augenblicks aufgehoben wird.

6. Verfahren zum Schalten nach einem der vorhergehenden Ansprüche, **dadurch gekennzeichnet, dass** ein Lösen des ursprünglichen Ganges (N) oder ein Übernehmen des Endganges (N-1) durch eine Messung der Position des Betätigungsglieds der Klauen dieser Gänge vermerkt wird.

7. Verfahren zum Schalten nach einem der vorhergehenden Ansprüche, **dadurch gekennzeichnet, dass** gleichzeitig zwei Gleichlaufvorrichtungen verwendet werden, die auf zwei verschiedenen Gängen angeordnet sind, die gleich oder größer als der ursprüngliche Gang (N) sind.
